# EUROPÄISCHE PATENTANMELDUNG

(11) **EP 4 528 412 A1**
(43) Veröffentlichungstag der Anmeldung: **26.03.2025**
(21) Anmeldenummer: 23199035.9
(22) Anmeldetag: 22.09.2023
(51) Int. Cl.: G05B 19/418, G05B 17/02, G05B 13/04

(54) **VERFAHREN ZUM BETREIBEN EINER PRODUKTIONSANLAGE MITTELS EINER ELEKTRONISCHEN RECHENEINRICHTUNG DER PRODUKTIONSANLAGE, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Langen, Manfred, 81827 München (DE)
(74) Vertreter: Siemens Patent Attorneys

(57) **Zusammenfassung**

Die Erfindung betrifft ein Verfahren zum Betreiben einer Produktionsanlage (10), mit den Schritten: Bereitstellen eines digitalen Zwillingsmodells (20) der Produktionsanlage (10); Bestimmen einer aktuellen Leistungskennzahl (24) der Produktionsanlage (10); Vergleichen der aktuellen Leistungskennzahl (24) mit einer vorgegebenen Leistungskennzahl für die Produktionsanlage (10); Durchführen einer Ähnlichkeitsanalyse (26) der Produktionsanlage (10) und zumindest einer weiteren Produktionsanlage (16) auf Basis des digitalen Zwillingsmodells (20) und zumindest eines weiteren digitalen Zwillingmodells (22) der weiteren Produktionsanlage (16) in Abhängigkeit von dem Vergleich; Bestimmen von zumindest einer weiteren Leistungskennzahl (28) der zumindest einen weiteren Produktionsanlage (16); und Anpassen einer Funktionseinheit (30) der Produktionsanlage (10) in Abhängigkeit von der bestimmten Ähnlichkeit zwischen der Produktionsanlage (10) und der zumindest einen weiteren Produktionsanlage (16) und in Abhängigkeit von der zumindest einen weiteren Leistungskennzahl (28). Ferner betrifft die Erfindung ein Computerprogrammprodukt, ein computerlesbares Speichermedium sowie eine elektronische Recheneinrichtung (12).

## Beschreibung

Die Erfindung betrifft ein Verfahren zum Betreiben einer Produktionsanlage mittels einer elektronischen Recheneinrichtung der Produktionsanlage gemäß dem geltenden Patentanspruch 1. Ferner betrifft die Erfindung ein Computerprogrammprodukt, ein computerlesbares Speichermedium sowie eine elektronische Recheneinrichtung.

Eine Produktionsanlage kann im Betrieb nicht wunschgemäß funktionieren, d.h. außerhalb von sogenannten definierten Leistungsparametern, welche auch als KPI (Key Performance Indicator) bezeichnet werden können. Da keine grundsätzliche Störung der Produktionsanlage vorliegt, ist durch Systemmeldungen oder Fehlercodes nicht ableitbar, woran der nicht wunschgemäße Betrieb liegt. In einem digitalen Zwilling können verschiedene Lösungsvarianten simuliert werden, aber ohne eine grundsätzliche Idee zur Ursache der schwachen Performance ist ein Lösungsraum sehr groß.

Hierzu wird im Stand der Technik auf die Erfahrung eines Spezialisten zurückgegriffen, welche eine Lösungsstrategie aus zahllosen Inbetriebnahmen oder Servicefällen entwickelt hat. Ein weniger erfahrener Spezialist sucht in Dokumenten oder telefoniert mit einem erfahrenen Spezialisten hinterher. Die Verwendung von sogenannten Best Practice Versuchen aus Servicedokumenten sind ebenfalls bekannt. Des Weiteren ist die Suche in sogenannten Frequently Asked Questions (FAQ) im Stand der Technik bekannt.

Aufgabe der vorliegenden Erfindung ist es ein Verfahren, ein Computerprogrammprodukt, ein computerlesbares Speichermedium sowie eine elektronische Recheneinrichtung zu schaffen, mittels welchen ein verbesserter Betrieb einer Produktionsanlage realisiert werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben einer Produktionsanlage mittels einer elektronischen Recheneinrichtung der Produktionsanlage. Es wird ein erstes digitales Zwillingsmodell der Produktionsanlage mittels der elektronischen Recheneinrichtung bereitgestellt. Es erfolgt das Bestimmen einer aktuellen Leistungskennzahl der Produktionsanlage mittels der elektronischen Recheneinrichtung. Es wird die aktuelle Leistungskennzahl mit einer vorgegebenen Leistungskennzahl für die Produktionsanlage mittels der elektronischen Recheneinrichtung verglichen. Es erfolgt das Durchführen einer Ähnlichkeitsanalyse der Produktionsanlage und zumindest einer weiteren Produktionsanlage auf Basis des ersten digitalen Zwillingsmodells und zumindest eines weiteren digitalen Zwillingmodells der weiteren Produktionsanlage in Abhängigkeit von dem Vergleich mittels der elektronischen Recheneinrichtung. Es wird zumindest eine weitere Leistungskennzahl der zumindest einen weiteren Produktionsanlage bestimmt. Es erfolgt das Anpassen einer Funktionseinheit der Produktionsanlage in Abhängigkeit von der bestimmten Ähnlichkeit zwischen der Produktionsanlage und der zumindest einen weiteren Produktionsanlage und in Abhängigkeit von der zumindest einen weiteren Leistungskennzahl mittels der elektronischen Recheneinrichtung.

Somit kann ein verbesserter Betrieb der Produktionsanlage realisiert werden.

Insbesondere wird somit beschrieben, wie eine Produktionsanlage im Hinblick auf verschiedene Leistungsparameter, insbesondere Leistungskennzahlen, durch ein automatisches Verfahren verbessert werden kann. Hierfür wird das Wissen über Ausstattung und Konfigurationen bei ähnlichen Produktionsanlagen herangezogen. Dieser Wissensaustausch erfolgt automatisch durch eine Kommunikation zwischen den digitalen Zwillingen der jeweiligen Produktionsanlagen. Durch den Vergleich von Konfigurationswerten bis hin zur Modulebene werden insbesondere Lösungsmöglichkeiten gefunden und schlecht laufende Produktionsanlagen können dadurch verbessert werden, die dann simuliert werden und bei einer Eignung entsprechend in die elektronische Recheneinrichtung bzw. Produktionsanlage implementiert werden.

Insbesondere liegt somit der Lösungsansatz darin, dass das digitale Zwillingsmodell der suboptimalen Produktionsanlage sich mit den Eigenschaften der digitalen Zwillinge ähnlicher Produktionsanlagen, die besser funktionieren, vergleicht. Aus diesem Vergleich werden Empfehlungen generiert, wie die Produktionsanlage verbessert werden kann. Diese werden dann simuliert und implementiert.

Insbesondere hat dies den Vorteil, dass eine automatische Diagnoseunterstützung durch digitale Zwillinge bereitgestellt wird. Ferner kann eine Uptime einer Produktionsanlage durch eine Problembehebung gesteigert werden. Auch ein Optimierungspotenzial bei störungsfrei laufenden Produktionsanlagen kann erkannt werden. Des Weiteren kann eine Energieeffizienz durch Quervergleich zu anderen Anlagen verbessert werden. Des Weiteren kann eine Remote-Optimierung bei reinen Software-Konfigurationsabweichungen realisiert werden. Ferner ist auch die Expertise des Vor-Ort-Service niedrig gehalten.

Gemäß einer vorteilhaften Ausgestaltungsform wird eine Hardware-Konfiguration der Produktionsanlage und/oder eine Software-Konfiguration der Produktionsanlage als die jeweilige Funktionseinheit angepasst. Beispielsweise kann eine Abhängigkeit von der Ähnlichkeitsanalyse festgestellt werden, dass eine Änderung in der Hardware-Konfiguration und/oder in der Software-Konfiguration durchzuführen ist, um zu einer verbesserten Leistungskennzahl zu führen. Somit kann in Abhängigkeit von dem Vergleich und der entsprechenden Analyse ein Vorschlag erzeugt werden eine entsprechende Hardware-Konfiguration und/oder Software-Konfiguration an der Produktionsanlage zu verändern bzw. anzupassen. Somit kann der Betrieb der Produktionsanlage verbessert werden.

Ebenfalls vorteilhaft ist, wenn die Ähnlichkeitsanalyse auf Basis gemeinsamer Hardware-Konfigurationen und/oder auf Basis gemeinsamer Software-Konfigurationen der Produktionsanlagen durchgeführt wird. Insbesondere wird somit die Ähnlichkeit bezüglich der entsprechenden Komponenten der Produktionsanlagen überprüft. Insbesondere können dabei sowohl Hardware-Konfiguration als auch Software-Konfiguration entsprechend miteinander verglichen werden. Somit kann auf unterschiedlichen Ebenen eine Ähnlichkeitsuntersuchung bzw. Ähnlichkeitsanalyse durchgeführt werden, wodurch zuverlässig der Betrieb der Produktionsanlage entsprechend angepasst bzw. verbessert werden kann.

Ferner hat es sich als vorteilhaft erwiesen, wenn ein Ähnlichkeitswert zwischen der Produktionsanlage und der zumindest einer weiteren Produktionsanlage bestimmt wird und die Anpassung unter Berücksichtigung des Ähnlichkeitswerts durchgeführt wird. Insbesondere kann somit vorgesehen sein, sollten die Produktionsanlagen nicht vollkommen identisch sein, dass ein entsprechender Ähnlichkeitswert bestimmt wird. Auf Basis dieses Ähnlichkeitswerts kann dann bspw. bestimmt werden, dass bestimmte Software-Konfigurationen und/oder Hardware-Konfiguration unterschiedlich zu der anderen Produktionsanlage sind. Unter Berücksichtigung dieses Ähnlichkeitswerts bzw. des Unterschieds kann nun vorgesehen sein, dass eine entsprechende Anpassung vorgenommen wird. Sollte bspw. eine elektrische Pumpe der einen Anlage lediglich 80% der Pumpkapazität der anderen Anlage aufweisen, so kann eine entsprechende Anpassung oder Berücksichtigung dieser Kapazität durchgeführt werden. Dadurch kann ein verbesserter Betrieb der Produktionsanlage realisiert werden.

Es hat sich weiterhin als vorteilhaft erwiesen, wenn die Leistungskennzahl auf Basis einer produzierten Stückzahl pro Zeiteinheit der Produktionsanlage und/oder einer Fehlerrate der Produktionseinheit und/oder einer Verfügbarkeit der Produktionsanlage und/oder eines Energieverbrauchs der Produktionsanlage bestimmt wird. Insbesondere handelt es sich somit bei diesen vorgeschlagenen Leistungskennzahlen um wesentliche Key Performance Indikatoren, welche die Produktivität einer Produktionsanlage beschreiben. Auf Basis dieser Leistungskennzahl kann nun ein Vergleich mit den Leistungskennzahlen von anderen Produktionsanlagen durchgeführt werden. Dies ermöglicht einen detailreichen Vergleich unterschiedlicher Produktionsanlagen miteinander, wodurch wiederum verschiedene Überwachungsmaßnahmen eingeleitet werden können, welche bspw. zu der Verbesserung der Produktionsanlage führen können.

Es hat sich weiterhin als vorteilhaft erwiesen, wenn eine potentielle Anpassung der Funktionseinheit vor der tatsächlichen Anpassung mittels des ersten digitalen Zwillingsmodells simuliert wird. Beispielsweise kann dann simuliert werden, welchen Einfluss eine potenzielle Anpassung auf die tatsächliche Produktionsanlage hat. Somit kann ein Nutzer der Produktionsanlage sehen, ob eine entsprechende Änderung potenziell sinnvoll erscheint, oder nicht. Somit kann bspw. verhindert werden, sollten entsprechende Hardware-Konfigurationen ausgetauscht werden müssen, ob sich der Einsatz eines solchen Hardware-Tauschs lohnt, oder ob bspw. andere Änderungen an der Produktionsanlage zu einer ähnlichen Verbesserung der Leistungskennzahl mit weniger Aufwand führen.

Weiterhin vorteilhaft ist, wenn eine Ähnlichkeitsanalyse nur auf Basis von Funktionseinheiten der Produktionsanlage durchgeführt wird, welche einen Einfluss auf die Leistungskennzahl haben. Insbesondere, da nicht jede installierte Komponente der Produktionsanlage relevant für eine Kategorie der Leistungskennzahl ist, kann der Fokus somit nur auf die Suche von den relevanten Komponenten reduziert werden. Beispielsweise kann dies auch in Abhängigkeit von unterschiedlichen Leistungskennzahlen durchgeführt werden. Beispielsweise hat eine Komponente einen Einfluss auf die Leistungskennzahl bezüglich der Stückzahl während eine andere Komponente lediglich Einfluss auf eine Fehlerrate hat. Somit kann, je nachdem welche Leistungskennzahl verbessert werden soll, eine entsprechende Suche nur bei den entsprechenden Komponenten durchgeführt werden. Somit kann zuverlässig der Betrieb der Produktionsanlage verbessert werden.

Es hat sich weiterhin als vorteilhaft erwiesen, wenn nur weitere Produktionsanlagen in Betracht gezogen werden, welche einen vorgegebenen Schwellwert bezüglich der weiteren Leistungskennzahl überschreiten. Sollte bspw. die Leistungskennzahl einer Produktionsanlage ebenfalls sehr niedrig sein, so kann verhindert werden, dass diese in Betracht gezogen wird. Somit können nur gut funktionierende Anlagen, insbesondere deren Leistungskennzahl oberhalb eines vorgegebenen Schwellwerts liegt, in Betracht gezogen werden, wodurch unnötige Anpassungen bzw. Ähnlichkeitsanalysen verhindert werden können. Somit kann äußerst effizient ein Betrieb der Produktionsanlage verbessert werden.

Gemäß einer weiteren vorteilhaften Ausgestaltungsform wird vor der Anpassung der Funktionseinheit zumindest ein Änderungsvorschlag der zumindest einen Funktionseinheit für einen Nutzer der Produktionsanlage erzeugt. Beispielsweise kann der Änderungsvorschlag auf eine Anzeigeeinrichtung für den Nutzer angezeigt werden. Somit erhält der Nutzer Informationen, welche Änderungen von der elektronischen Recheneinrichtung vorgeschlagen werden, um eine entsprechende Leistungssteigerung durchführen zu können. Dies hat insbesondere den Vorteil, dass der Nutzer aus unterschiedlichen Möglichkeiten wählen kann, welche er als relevant ansieht und welche bspw. im Rahmen einer sinnvollen Änderung der Produktionsanlage liegen.

Es hat sich weiterhin als vorteilhaft erwiesen, wenn vor einer Anpassung der Funktionseinheit eine Kompatibilitätsprüfung einer potentiellen Anpassung der Funktionseinheit durchgeführt wird. Sollte bspw. festgestellt werden, dass eine entsprechende Drehzahl einer Pumpe zu erhöhen ist, um zu einer Leistungssteigerung zu gelangen, jedoch die Pumpe außerhalb dieses Leistungsspektrums liegt, so kann verhindert werden, dass ein solcher Vorschlag durchgeführt wird. Insbesondere können somit die entsprechenden Änderungen auf Komptabilität mit der Produktionsanlage überprüft werden. Sollte die Änderung nicht kompatibel mit der Produktionsanlage sein, so kann eine entsprechende Simulation bzw. Anpassung verhindert werden, wodurch insbesondere Zeit- und Rechenkapazität eingespart werden kann.

Ferner hat es sich als vorteilhaft erwiesen, wenn die Produktionsanlage und die zumindest eine weitere Produktionsanlage miteinander vernetzt bereitgestellt werden. Besonders sind zumindest die digitalen Zwillinge miteinander vernetzt bereitgestellt. Beispielsweise können die digitalen Zwillingsmodelle über ein Netzwerk miteinander verbunden sein und miteinander kommunizieren. Somit ist es ermöglicht, dass auf einfache Art und Weise ein Vergleich zwischen den digitalen Zwillingsmodellen durchgeführt werden kann.

Ferner hat es sich als vorteilhaft erwiesen, wenn erst bei einer vorgegebenen Abweichung zwischen der aktuellen Leistungskennzahl und der vorgegebenen Leistungskennzahl eine Ähnlichkeitsanalyse und/oder eine Anpassung einer Funktionseinheit durchgeführt wird. Insbesondere können somit unnötige Veränderungen und Anpassungen an der Produktionsanlage verhindert werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit zumindest einem Computerprogrammprodukt.

Ein nochmals weiterer Aspekt der Erfindung betrifft eine elektronische Recheneinrichtung zum Betreiben einer Produktionsanlage, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Ein nochmals weiterer Aspekt der Erfindung betrifft eine Produktionsanalage mit einer elektronischen Recheneinrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie der Produktionsanlage anzusehen. Die elektronische Recheneinrichtung sowie die Produktionsanlage weisen hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Unabhängig vom grammatikalischen Geschlecht eines bestimmten Begriffes sind Personen mit männlicher, weiblicher oder anderer Geschlechteridentität mit umfasst.

Dabei zeigen:
FIG 1 eine schematisches Blockschaltbild gemäß einer Ausführungsform einer Produktionsanlage mit einer Ausführungsform einer elektronischen Recheneinrichtung;
FIG 2 ein schematisches Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

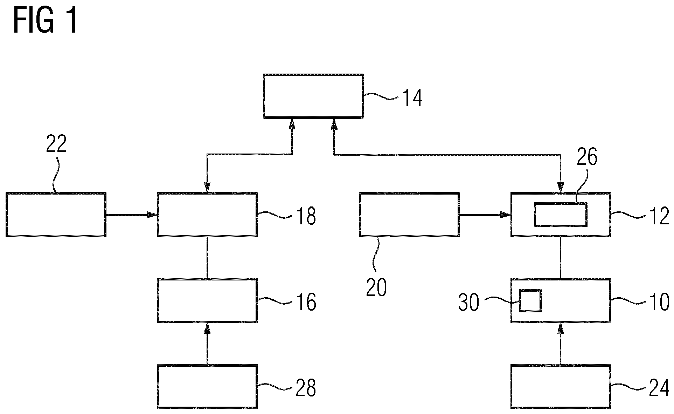

FIG 1 zeigt ein schematisches Blockschaltbild gemäß einer Ausführungsform einer Produktionsanalage 10 mit einer Ausführungsform einer elektronischen Recheneinrichtung 12. Die elektronische Recheneinrichtung 12 ist mit einem Netzwerk 14 gekoppelt. Ferner zeigt die FIG 1 zumindest eine weitere Produktionsanlage 16, welche ebenfalls eine weitere elektronische Recheneinrichtung 18 aufweist. Die weitere elektronische Recheneinrichtung 18 ist ebenfalls mit dem Netzwerk 14 gekoppelt. Für die Produktionsanlage 10 wird innerhalb der elektronischen Recheneinrichtung 12 ein erstes digitalen Zwillingsmodells 20 der Produktionsanlage 10 bereitgestellt. Ferner wird ein weiteres digitales Zwillingsmodell 22 für die zumindest eine weitere Produktionsanlage 16 bereitgestellt.

Insbesondere kann vorgesehen sein, dass die Produktionsanlage 10 und die weitere Produktionsanlage 16 unterschiedlich disloziert ausgebildet sind, mit andere Worten sich an unterschiedlichen Orten, befinden. Diese sind insbesondere lediglich über das Netzwerk 14 miteinander verbunden.

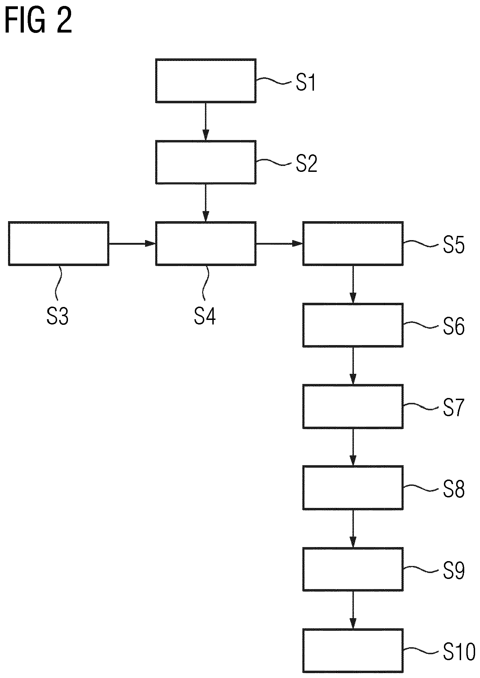

FIG 2 zeigt ein schematisches Ablaufdiagramm gemäß einer Ausführungsform des Verfahrens. In einem ersten Schritt S1 werden die unterschiedlichen digitalen Zwillingsmodelle 20, 22 bereitgestellt. In einem zweiten Schritt S2 werden die unterschiedlichen digitalen Zwillingsmodelle 20, 22 bspw. in einer Speichereinrichtung des Netzwerks 14 bereitgestellt, wobei diese aber insbesondere in Abhängigkeit eines Produktionsanlagentyps abgespeichert sind. In einem dritten Schritt S3 folgt wiederum das Anfragen der Produktionsanlage 10. Im vierten Schritt S4 werden entsprechende Leistungskennzahlen überprüft, wobei in einem fünften Schritt S5 wiederum eine Liste von potenziellen weiteren Produktionsanlagen 16 aufgelistet wird. In einem sechsten Schritt S6 findet wiederum ein Ähnlichkeitsvergleich zwischen der Produktionsanlage 10 und der weiteren Produktionsanlage 16 statt. In einem siebten Schritt S7 kann ein Ähnlichkeitswert zwischen den Produktionsanlagen 10 und 16 übermittelt werden. In Abhängigkeit des Ähnlichkeitswerts kann dann in einem achten Schritt S8 eine Kompatibilitätsprüfung einzelner Komponenten zwischen den Produktionsanlagen 10 und 16 durchgeführt werden. In einem neunten Schritt S9 kann wiederum eine Simulation von potenziellen Änderungen bei der Produktionsanlage 10 mittels der elektronischen Recheneinrichtung 12 durchgeführt werden. In einem zehnten Schritt S10 kann wiederum eine Anpassung einer Funktionseinheit 30 bzw. Komponente der Produktionsanlage 10 vorgenommen werden.

Insbesondere zeigt somit die FIG 2 ein Verfahren zum Betreiben der Produktionsanlage 10 mittels der elektronischen Recheneinrichtung 12. Es erfolgt das Bereitstellen des digitalen Zwillingsmodells 20 der Produktionsanlage 10 mittels der elektronischen Recheneinrichtung 12. Es wird eine aktuelle Leistungskennzahl 24 der Produktionsanlage 10 mittels der elektronischen Recheneinrichtung 12 bestimmt. Es erfolgt das Vergleichen der aktuellen Leistungskennzahl 24 mit einer vorgegebenen Leistungskennzahl, insbesondere einer sogenannten Soll-Leistungskennzahl, für die Produktionsanlage 10 mittels der elektronischen Recheneinrichtung 12. Es wird eine Ähnlichkeitsanalyse 26 der Produktionsanlage 10 und zumindest der weiteren Produktionsanlage 16 auf Basis des digitalen Zwillingsmodells 20 und zumindest des weiteren digitalen Zwillingsmodells 22 der weiteren Produktionsanlage 16 in Abhängigkeit von dem Vergleich mittels der elektronischen Recheneinrichtung 12 durchgeführt. Es erfolgt das Bestimmen von zumindest einer weiteren Leistungskennzahl 28, bspw. mittels der weiteren elektronischen Recheneinrichtung 18. Die weitere Leistungskennzahl 28 kann bspw. über das Netzwerk 14 der elektronischen Recheneinrichtung 12 mitgeteilt werden. Es erfolgt dann das Anpassen einer Funktionseinheit 30 der Produktionsanlage 10 in Abhängigkeit von der bestimmten Ähnlichkeit zwischen der Produktionsanlage 10 und der zumindest einer weiteren Produktionsanlage 16 und in Abhängigkeit von der zumindest einen weiteren Leistungskennzahl 28 mittels der elektronischen Recheneinrichtung 12.

Insbesondere kann vorgesehen sein, dass eine Hardware-Konfiguration der Produktionsanlage 10 und/oder eine Software-Konfigurationsanlage der Produktionsanlage 10 als die jeweilige Funktionseinheit 30 angepasst wird. Ferner kann vorgesehen sein, dass die Ähnlichkeitsanalyse 26 auf Basis gemeinsamer Hardware-Konfigurationen und/oder auf Basis gemeinsamer Software-Konfigurationen der Produktionsanlagen 10, 16 durchgeführt wird. Hierbei kann ferner vorgesehen sein, dass ein Ähnlichkeitswert zwischen der Produktionsanlage 10 und der weiteren Produktionsanlage 16 bestimmt wird und die Anpassungen unter Berücksichtigung des Ähnlichkeitswerts durchgeführt werden.

Ferner kann vorgesehen sein, dass die Leistungskennzahl 24 auf Basis einer produzierten Stückzahl pro Zeiteinheit der Produktionsanlage 10 und/oder eine Fehlerrate der Produktionsanlage 10 und/oder eine Verfügbarkeit der Produktionsanlage 10 und/oder eines Energieverbrauchs der Produktionsanlage 10 bestimmt wird.

Ferner kann vorgesehen sein, dass eine potenzielle Anpassung der Funktionseinheit 30 vor der tatsächlichen Anpassung mittels des ersten digitalen Zwillingsmodells 20 simuliert wird. Weiterhin kann vorher vorgesehen sein, dass vor der Anpassung der Funktionseinheit 30 eine Kompatibilitätsprüfung einer potenziellen Anpassung der Funktionseinheit 30 durchgeführt wird. Ebenfalls kann vorgesehen sein, dass vor der Anpassung der Funktionseinheit 30 zumindest ein Änderungsvorschlag der zumindest einen Funktionseinheit 30 für einen Nutzer der Produktionsanlage 10 erzeugt wird. Es kann weiterhin vorgesehen sein, dass eine Ähnlichkeitsanalyse 26 nur auf Basis von Funktionseinheiten 30 der Produktionsanlage 10 durchgeführt wird, welche einen Einfluss auf die Leistungskennzahl 24 hat. Des Weiteren können nur weitere Produktionsanlagen 10 in Betracht gezogen werden, welche einen vorgegebenen Schwellenwert bezüglich der weiteren Leistungskennzahl 28 überschreiten.

Insbesondere sieht somit die Erfindung vor, dass das digitale Zwillingsmodell 20 der Produktionsanlage 10 sich mit den Eigenschaften der digitalen Zwillinge ähnlicher Produktionsanlagen, insbesondere der weiteren Produktionsanlage 16, die besser funktionieren, vergleicht. Aus diesem Vergleich werden Empfehlungen generiert, wie die Produktionsanlage 10 verbessert werden kann. Diese werden dann simuliert und implementiert.

Alle Anlagen eines Typs, bspw. alle Abfüllanlagen einer weltweit produzierten Brauerei, werden so miteinander vernetzt, dass nicht die operativen Anlagen selbst im Netzwerk verbunden sind, sondern deren digitalen Zwillingsmodelle 20, 22. Damit werden auch Security Requirements besser erfüllt.

Eine kontinuierliche Leistungsüberwachung detektiert Abweichungen in Bezug auf die Leistungskennzahlen der Kategorie produzierte Stückzahl pro Zeiteinheit, Fehlerrate bzw. produzierter Ausschuss pro Zeiteinheit, Verfügbarkeit bzw. kumulierte Zeiten des Stillstands, und eingesetzte Energie, absolut und relativ bezogen auf produzierte Stückzahlen.

Liegt die Abweichung über einer definierten Schwelle, so wird ein Verfahren zur Leistungsverbesserung, wie bereits beschrieben, angestoßen. Nicht jede installierte Komponente der Produktionsanlage 10 ist relevant für eine KPI-Kategorie, die bei der Suche im Fokus steht. Dafür ist im digitalen Zwillingsmodell 20 vermerkt, welche Relevanz eine Komponente für die gewählte KPI-Kategorie hat. Dies kann als Teil eines Knowledge Graphen zur Produktionsanlage 10 realisiert werden.

In Bezug auf die gewählte KPI-Kategorie, z.B. N, startet das digitale Zwillingsmodell 20 der Problemanlage eine Suchanfrage in das Netzwerk 14 aller digitalen Zwillingsmodell 20, 22 von Anlagen eines ähnlichen Typs, um im ersten Schritt ähnliche Anlagen ausfindig zu machen. Das Ähnlichkeitsmaß wird über die installierten Komponenten sowie deren Konfiguration definiert. Es ist in einem Komponenten-Vektor der Anlage (vorhandene Komponenten der Anlage und deren Zusammenhang im Gesamtsystem) komprimiert, so dass ein Suchindex ähnlich von Indizes über Textdokumente entsteht. Dieser Suchindex kann zentral abgelegt werden und erlaubt eine effizientere Suche als eine unmittelbare Abfrage aller Produktionsanlagen 10, 16 zur Suchzeit. Zur Vereinfachung der Indizierung werden alle Anlagen eines Typs in einem Directory (Datenbank) geführt.

Ein entsprechender Feature-Vektor der Funktionseinheiten 30 umfasst die Funktionseinheiten 30 der relevanten Komponenten der Produktionsanlage 10 mit deren technischen Eigenschaften. Ein Eigenschaftswert kann fest (z.B. Hardware-spezifisch) oder semi-variabel (Hardware-Konfigurationswert) oder variabel (Software-Konfigurationswert) sein.

Als Ergebnis erhält man eine gerankte Liste der ähnlichsten weiteren Produktionsanlagen 16. Je nachdem, wie eng die Suchergebnisse im Wert zusammenliegen und in welchem Wertebereich das Ähnlichkeitsmaß liegt, werden ein oder mehrere weitere Produktionsanlagen 16 zur näheren Betrachtung herangezogen, vorausgesetzt, diese arbeiten wunschgemäß.

Durch einen Algorithmus zum Vergleich der ähnlichen Produktionsanlagen 10, 16, d.h. insbesondere deren digitalen Zwillingsmodell 20, 22, werden nun automatisch Abweichungen erkannt, die zur Verbesserung der Problemanlage beitragen können. Dabei werden sowohl Abweichungen der Software-Konfiguration als auch die Abweichungen bei den Hardware-Komponenten einbezogen.

Ein Komponentenvergleich erfolgt über die relevanten Funktionseinheiten 30 mit den jeweiligen Features.

Hierbei kann der Standard für Modularität mit der Bezeichnung Modular Type Package (MTP) (VDI/VDE/NAMUR 2658) herangezogen werden - wie Kommunikation, Alarme, Sicherheit usw. MTP hat sich zu einem IEC-Standard für den Lebenszyklus von Komponenten in einer Produktionsanlage 10, 16 entwickelt, wodurch ein Upgrade oder Austausch von Bauteilen zu jedem Zeitpunkt ohne Hürden möglich ist.

Ein Änderungsvorschlag ergibt sich, wenn ein relevantes Feature im Kontext abweicht.

Die erkannten Abweichungen zwischen den Produktionsanlagen 10, 16 werden im digitalen Zwillingsmodell 20 der Produktionsanlage 10 durchsimuliert. Zuvor wird überprüft, ob die Änderung ein Kompatiblitätsproblem erzeugt. Diese Information enthält der Knowledge Graph der Produktionsanlage 10, in dem alle erlaubten Varianten gespeichert sind. Damit wird die Kompatibilität der geänderten Variante vor der Simulation gewährleistet.

Führt die Anwendung von einer der erkannten Abweichungen zu verbessertem KPI in der gewählten KPI-Kategorie (z.B. weniger Ausschuss), so ist eine Lösung gefunden.

Software-basierte Lösungen lassen sich unmittelbar in der produktiven Produktionsanlage 10 einspielen, während Hardware-basierte Veränderungen entweder durch entsprechend programmierte Roboter vorgenommen werden oder falls dies nicht möglich ist, einen angeleiteten Austausch (step-by-step instruction) initiieren.

### Bezugszeichenliste

- 10: Produktionsanlage
- 12: elektronische Recheneinrichtung
- 14: Netzwerk
- 16: weitere Produktionsanlage
- 18: weitere elektronische Recheneinrichtung
- 20: digitales Zwillingsmodell
- 22: weiteres digitales Zwillingsmodell
- 24: Leistungskennzahl
- 26: Ähnlichkeitsanalyse
- 28: weitere Leistungskennzahl
- 30: Funktionseinheit
- S1-S10: Schritte des Verfahrens

## Patentansprüche

1. Verfahren zum Betreiben einer Produktionsanlage (10) mittels einer elektronischen Recheneinrichtung (12) der Produktionsanlage (10), mit den Schritten:
- Bereitstellen eines digitalen Zwillingsmodells (20) der Produktionsanlage (10) mittels der elektronischen Recheneinrichtung (12);
- Bestimmen einer aktuellen Leistungskennzahl (24) der Produktionsanlage (10) mittels der elektronischen Recheneinrichtung (12);
- Vergleichen der aktuellen Leistungskennzahl (24) mit einer vorgegebenen Leistungskennzahl für die Produktionsanlage (10) mittels der elektronischen Recheneinrichtung (12);
- Durchführen einer Ähnlichkeitsanalyse (26) der Produktionsanlage (10) und zumindest einer weiteren Produktionsanlage (16) auf Basis des digitalen Zwillingsmodells (20) und zumindest eines weiteren digitalen Zwillingmodells (22) der weiteren Produktionsanlage (16) in Abhängigkeit von dem Vergleich mittels der elektronischen Recheneinrichtung (12);
- Bestimmen von zumindest einer weiteren Leistungskennzahl (28) der zumindest einen weiteren Produktionsanlage (16); und
- Anpassen einer Funktionseinheit (30) der Produktionsanlage (10) in Abhängigkeit von der bestimmten Ähnlichkeit zwischen der Produktionsanlage (10) und der zumindest einen weiteren Produktionsanlage (16) und in Abhängigkeit von der zumindest einen weiteren Leistungskennzahl (28) mittels der elektronischen Recheneinrichtung (12).

2. Verfahren nach Anspruch 1, **dadurch gekennzeichnet, dass** eine Hardware-Konfigurationen der Produktionsanlage (10) und/oder eine Software-Konfiguration der Produktionsanlage (10) als die jeweilige Funktionseinheit (30) angepasst wird.

3. Verfahren nach Anspruch 1 oder 2, **dadurch gekennzeichnet, dass** die Ähnlichkeitsanalyse (26) auf Basis gemeinsamer Hardware-Konfigurationen und/oder auf Basis gemeinsamer Software-Konfigurationen der Produktionsanlagen (10, 16) durchgeführt wird.

4. Verfahren nach einem der vorhergehenden Ansprüche, **dadurch gekennzeichnet, dass**
ein Ähnlichkeitswert zwischen der Produktionsanlage (10) und der zumindest einen weiteren Produktionsanlage (16) bestimmt wird und die Anpassung unter Berücksichtigung des Ähnlichkeitswerts durchgeführt wird.

5. Verfahren nach einem der vorhergehenden Ansprüche, **dadurch gekennzeichnet, dass**
die Leistungskennzahl (24) auf Basis einer produzierten Stückzahl pro Zeiteinheit der Produktionsanlage (10) und/oder einer Fehlerrate der Produktionseinheit (10) und/oder einer Verfügbarkeit der Produktionsanlage (10) und/oder eines Energieverbrauchs der Produktionsanlage (10) bestimmt wird.

6. Verfahren nach einem der vorhergehenden Ansprüche, **dadurch gekennzeichnet, dass**
eine potentielle Anpassung der Funktionseinheit (30) vor der tatsächlichen Anpassung mittels des ersten digitalen Zwillingsmodells (20) simuliert wird.

7. Verfahren nach einem der vorhergehenden Ansprüche, **dadurch gekennzeichnet, dass**
eine Ähnlichkeitsanalyse (26) nur auf Basis von Funktionseinheiten (30) der Produktionsanlage (10) durchgeführt wird, welche einen Einfluss auf die Leistungskennzahl (24) haben.

8. Verfahren nach einem der vorhergehenden Ansprüche, **dadurch gekennzeichnet, dass**
nur weitere Produktionsanlagen (16) in Betracht gezogen werden, welche einen vorgegebenen Schwellwert bezüglich der weiteren Leistungskennzahl (28) überschreiten.

9. Verfahren nach einem der vorhergehenden Ansprüche, **dadurch gekennzeichnet, dass**
vor der Anpassung der Funktionseinheit (30) zumindest ein Änderungsvorschlag der zumindest einen Funktionseinheit (309 für einen Nutzer der Produktionsanlage (10) erzeugt wird.

10. Verfahren nach einem der vorhergehenden Ansprüche, **dadurch gekennzeichnet, dass**
vor einer Anpassung der Funktionseinheit (30) eine Kompatibilitätsprüfung einer potentiellen Anpassung der Funktionseinheit (30) durchgeführt wird.

11. Verfahren nach einem der vorhergehenden Ansprüche, **dadurch gekennzeichnet, dass**
die Produktionsanlage (10) und die zumindest eine weitere Produktionsanlage (16) miteinander vernetzt bereitgestellt werden.

12. Verfahren nach einem der vorhergehenden Ansprüche, **dadurch gekennzeichnet, dass**
erst bei einer vorgegebenen Abweichung zwischen der aktuellen Leistungskennzahl (24) und der vorgegebenen Leistungskennzahl eine Ähnlichkeitsanalyse (26) und/oder eine Anpassung einer Funktionseinheit (30) durchgeführt wird.

13. Computerprogrammprodukt mit Programmcodemitteln, welche eine elektronische Recheneinrichtung (12) dazu veranlassen, wenn die Programmcodemittel von der elektronischen Recheneinrichtung (12) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (12) zum Betreiben einer Produktionsanlage (10), wobei die elektronische Recheneinrichtung (12) zum Durchführen eines Verfahrens nach einem der Ansprüche 1 bis 12 ausgebildet ist.
